# EUROPÄISCHE PATENTSCHRIFT

(11) **EP 4 256 159 B1**
(45) Veröffentlichungstag und Bekanntmachung des Hinweises auf die Patenterteilung: **11.09.2024**
(21) Anmeldenummer: 21835592.3
(22) Anmeldetag: 01.12.2021
(51) Int. Cl.: E05D 15/06, F16B 7/04, F16B 7/18

(54) **SCHIEBETÜRBESCHLAG UND VERFAHREN ZUR MONTAGE EINES SCHIEBETÜRBESCHLAGES**
SLIDING DOOR FITTING, AND METHOD FOR INSTALLING A SLIDING DOOR FITTING
FERRURE DE PORTE COULISSANTE, ET PROCÉDÉ D'INSTALLATION D'UNE FERRURE DE PORTE COULISSANTE

(30) Priorität: 02.12.2020 DE 102020132044
(43) Veröffentlichungstag der Anmeldung: 11.10.2023
(73) Patentinhaber: Hettich-Heinze GmbH & Co. KG, 32139 Spenge (DE)
(72) Erfinder: BÖWE, Marion, 33803 Steinhagen (DE); FLASPÖHLER, Dirk, 49124 Georgsmarienhütte (DE); WATERBÖR, Felix, 33613 Bielefeld (DE); KLENNER, Sebastian, 33729 Bielefeld (DE)
(74) Vertreter: Dantz, Jan Henning
(86) Internationale Anmeldenummer: PCT/EP2021/083763
(87) Internationale Veröffentlichungsnummer: WO 2022/117645

(56) Entgegenhaltungen:
- EP-A1- 0 572 936
- DE-A1- 10 204 349
- DE-U1- 29 901 506
- US-A- 1 945 332
- US-A- 2 649 612
- US-A- 3 431 585

## Beschreibung

Die vorliegende Erfindung betrifft einen Schiebetürbeschlag mit zwei an einer Stoßstelle über eine Profilverbindung miteinander verbundenen Profilen, die mindestens eine Laufbahn für Rollen oder Gleitkörper eines verfahrbaren Laufteils ausbilden, wobei die Profilverbindung ein an den Profilen festgelegtes Stützteil und ein über einen Spannmechanismus relativ zu dem Stützteil bewegbares Spannelement aufweist, das die beiden Profile zu dem Stützteil hin vorspannt und ein Verfahren zur Montage eines Schiebetürbeschlages, bei dem ein erstes Profil an einem Möbelkorpus und ein zweites Profil in Verlängerung des ersten Profils an dem Möbelkorpus festgelegt werden, wobei eine Profilverbindung an einer Stoßstelle des ersten und zweiten Profils fixiert wird.

Zur Montage von Schiebetürbeschlägen ist es aus der EP 2 815 136 B1 bekannt, zwei stirnseitig aneinander angeordnete Profile an einer Stoßstelle über eine Profilverbindung zu verstärken. Die Profilverbindung ist an einer Aufnahme der Profile verschwenkbar, um die Profile an einer Unterseite einer Laufbahn zu stützen. Solche Profilverbinder haben sich an sich bewährt, allerdings ist die Ebenheit der Laufbahn im Bereich der Stoßstelle noch in hohem Maße von der Genauigkeit der Montage der beiden Profile zueinander abhängig. Eine bei der Montage entstandene Stufe an der Stoßstelle zwischen den beiden Profilen lässt sich über den Profilverbinder nur teilweise ausgleichen.

Die DE 10 2019 101 334 A1 offenbart einen Schiebetürbeschlag für Möbel, bei dem an einer Laufschiene ein Führungselement für eine Laufrolle montiert ist, das seitlich neben der Laufbahn eine Führungsbahn ausbildet, die beim Überfahren der Laufrolle ein Anheben und nachfolgendes Absenken bewirkt. Dadurch kann eine geringfügige Stufenbildung im Stoßbereich der beiden Laufschienenprofile kompensiert werden, da die Laufrolle über die Führungsbahn des Führungselementes geleitet wird. Die Montage des Führungselementes ist aufwändig, und zudem sorgen die Öffnungen in den Laufprofilen für eine gewisse Materialschwächung.

EP 0 572 936 A1 offenbart eine Schiene mit zwei aneinander anschliessenden Profilstücken gleichen Querschnitts, die mittels eines Kupplungsstücks verbunden werden. Ein Kontaktstreifen des Kupplungsstücks drückt gegen jedes der Profilstücke, um diese zu verspannen.

US 3 431 585 A offenbart eine Schienenkonstruktion mit mehreren Schienenstücken, die über Verbindungselemente abgestützt sind. Die Verbindungselemente können über Schrauben verspannt werden. Eine ähnliche Konstruktion offenbaren auch US 2,649,612 und US 1,945,332.

Es ist daher Aufgabe der vorliegenden Erfindung, einen Schiebetürbeschlag und ein Verfahren zur Montage eines Schiebetürbeschlages zu schaffen, die eine stabile Abstützung und Ausrichtung der Profile im Bereich einer Stoßstelle gewährleisten und eine effektive Montage des Schiebetürbeschlages ermöglichen.

Diese Aufgabe wird mit einem Schiebetürbeschlag mit den Merkmalen des Anspruches 1 sowie einem Verfahren mit den Merkmalen des Anspruches 12 gelöst.

Der erfindungsgemäße Schiebetürbeschlag umfasst eine Profilverbindung an der Stoßstelle der miteinander verbundenen Profile, die ein an den Profilen festgelegtes Stützteil und ein über einen Spannmechanismus relativ zu dem Stützteil bewegbares Spannelement aufweist, das die beiden Profile zu dem Stützteil hin vorspannt. Über den Spannmechanismus kann das Spannelement relativ zu dem Stützteil bewegt werden, um die beiden Profile im Bereich der Stoßstelle auszurichten und zu nivellieren, also eine etwaige Stufe zwischen den beiden Profilen auszugleichen. Durch den Spannmechanismus können relativ hohe Kräfte übertragen werden, die an der Stoßstelle für eine Stabilisierung sorgen.

Vorzugsweise ist das Spannelement relativ zu dem Stützteil über den Spannmechanismus in der eingebauten Position in vertikale Richtung bewegbar. Der Spannmechanismus kann dabei für eine Bewegung des Spannelementes relativ zu dem Stützteil zwischen 0,5 mm und 4 mm sorgen, so dass ein effektives Verspannen ermöglicht wird.

In einer Ausgestaltung liegt das Spannelement an den beiden Profilen auf der zu der mindestens einen Laufbahn gegenüberliegenden Seite an.

Das Spannelement ist erfindungsgemäß an einer Unterseite der unteren Laufbahn positioniert und stüzt diese in der verspannten Position ab. Dadurch überlagern sich Spannkräfte und die Haltekräfte der Profile, wenn die Profile in dem Stoßbereich durch ein Laufteil an einer Schiebetür überfahren werden. Für eine zuverlässige Abstützung kann das Spannelement dabei eine hervorstehende Leiste aufweisen, die die Laufbahn untergreift. Die Leiste kann dabei über die Stoßstelle durchgängig angeordnet sein und eine Länge von beispielsweise größer 20mm aufweisen, so dass der gesamte Bereich benachbart der Stoßstelle über die Leiste abgestützt wird.

Für einen kompakten Aufbau weisen die Profile erfindungsgemäß mindestens zwei in der Einbauposition übereinander liegende Laufbahnen auf, wobei das Spannelement an einer Unterseite der unteren Laufbahn anliegt. Durch die in vertikaler Richtung übereinander liegenden Laufbahnen, insbesondere im Wesentlichen in der gleichen Ebene liegenden Laufbahnen, wird der Raumbedarf minimiert, und zudem kann die untere Laufbahn, die sich leichter verbiegen kann, durch das Spannelement stabilisiert werden.

Für eine effektive Montage kann das Stützelement zwei Haken aufweisen, wobei jeweils ein Haken eine Öffnung an einem der beiden Profile durchgreift. Dadurch kann das Stützelement mit jeweils einem Haken in ein Profil eingreifen und dort abgestützt sein, um das Spannelement in der gewünschten Position zu positionieren. Die Öffnungen an den Profilen können in einem vertikalen Abschnitt der Profile angeordnet sein, so dass Spannkräfte in vertikale Richtung effektiv übertragen werden können.

Der Spannmechanismus umfasst vorzugsweise einen verschwenkbaren Spannhebel, der relativ zu dem Stützteil bewegbar ist. An dem Spannhebel oder einem mit dem Spannhebel verbundenen Bauteil kann dabei eine Kurvenführung ausgebildet sein, die entlang eines Gegenlagers bewegbar ist. Dadurch kann durch Drehen des Spannhebels die Kurvenführung und das Gegenlager für eine Bewegung des Spannelementes relativ zu dem Stützteil sorgen. Die Drehachse des Spannhebels kann dabei in Längsrichtung der Profile parallel oder senkrecht ausgebildet sein. In jedem Fall ermöglicht ein Spannmechanismus mit einem verschwenkbaren Spannhebel eine werkzeugfreie Montage nach Art eines Schnellspanners, bei der der Spannmechanismus mit dem Spannhebel als vormontierte Einheit an den beiden Profilen montiert werden kann. Statt einer Kurvenführung kann auch ein Kniehebelmechanismus oder eine andere Betätigungsmechanik für den verschwenkbaren Spannhebel eingesetzt werden.

Alternativ kann der Spannmechanismus eine Gewindestange und eine an der Gewindestange aufgeschraubte Mutter umfassen. Die Mutter kann dabei ebenfalls über Flügel oder Vorsprünge manuell betätigt werden, beispielsweise als Rändelmutter, um eine werkzeuglose Montage des Spannmechanismus zu ermöglichen. Über die Mutter können die Spannkräfte zwischen Spannelement und Stützteil effektiv eingestellt werden.

In einer alternativen Ausgestaltung kann die Profilverbindung zusätzlich über ein Halteelement verfügen, dass eine Befestigung an einer Unterseite des Oberbodens ermöglicht.

In einer weiteren Ausgestaltung ist an einer Stoßstelle der Profile ein Einlegeteil an oder auf einer Laufbahn eingelegt. Dadurch kann eine Gewichtslast optional von der Laufbahn an den beiden Profilen zumindest für einen gewissen Verfahrbereich auf das Einlegeteil verlagert werden, um eine verbesserte Lastverteilung im Stoßbereich zu erhalten.

Der erfindungsgemäße Schiebetürbeschlag wird vorzugsweise bei einem Möbel an einem Möbelkorpus eingesetzt, insbesondere an einem Oberboden, um eine oder mehrere Schiebetüren hängend verfahrbar zu lagern. Es ist aber auch möglich, den Schiebetürbeschlag für Raumteiler oder andere Zwecke einzusetzen.

Bei dem erfindungsgemäßen Verfahren zur Montage eines Schiebetürbeschlages wird zunächst ein erstes Profil an einem Möbelkorpus und ein zweites Profil in Verlängerung des ersten Profils an dem Möbelkorpus festgelegt. Nach der Festlegung der Profile kann dann eine Profilverbindung an einer Stoßstelle des ersten und zweiten Profils fixiert werden, wobei die Profilverbindung ein an den Profilen festgelegtes Stützteil und ein über einen Spannmechanismus relativ zu dem Stützteil bewegbares Spannelement aufweist, das beim Fixieren an den Profilen relativ zu dem Stützteil verspannt wird. Die Bewegung des Spannelementes relativ zu dem Stützteil kann beim Verspannen beispielsweise zwischen 0,5 mm und 4 mm betragen, um die Profile im Bereich der Stoßstelle zu verspannen und zu stabilisieren.

Vorzugsweise erfolgt das Verspannen des Spannelementes relativ zu dem Stützteil werkzeugfrei über einen verschwenkbaren Hebel oder eine drehbare Mutter, so dass der Schiebetürbeschlag in kurzer Zeit an dem Möbelkorpus festgelegt werden kann.

Die Erfindung wird nachfolgend anhand mehrerer Ausführungsbeispiele mit Bezug auf die beigefügten Zeichnungen näher erläutert. Es zeigen:

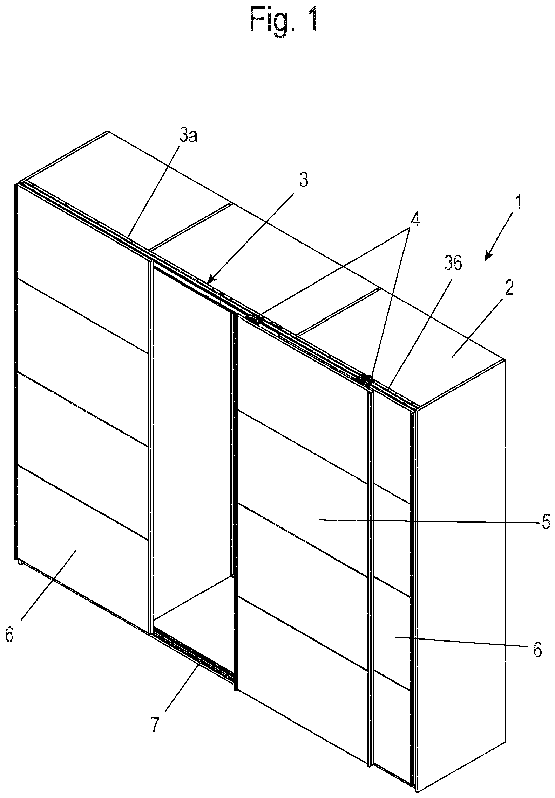

- Figur 1: eine perspektivische Ansicht eines Möbels mit einem erfindungsgemäßen Schiebetürbeschlag;
- Figuren 2A bis 2D: mehrere Ansichten des Schiebetürbeschlages bei der Montage in einer Ausgangsposition;
- Figuren 3A bis 3C: mehrere Ansichten des Schiebetürbeschlages der Figur 2 in einer verspannten Position;
- Figuren 4A und 4B: zwei Ansichten des Schiebetürbeschlages der Figur 2 mit Einlegeteilen;
- Figur 5: eine Explosionsdarstellung eines Schiebetürbeschlages gemäß eines zweiten Ausführungsbeispiels;
- Figuren 6A bis 6C: mehrere Ansichten des Schiebetürbeschlages der Figur 5 in einem verspannten Zustand;
- Figuren 7A und 7B: zwei Ansichten des Schiebetürbeschlages der Figur 5 bei der Montage;
- Figur 8: eine Explosionsdarstellung eines dritten Ausführungsbeispiels eines erfindungsgemäßen Schiebetürbeschlages;
- Figuren 9A und 9B: zwei Ansichten des Schiebetürbeschlages der Figur 8 in einer montierten Position, und
- Figur 10: eine Detailansicht des Schiebetürbeschlages der Figur 8.

Ein Schrankmöbel 1 umfasst einen Möbelkorpus 2, der an einer Vorderseite Öffnungen aufweist, die über mehrere Schiebetüren 5 und 6 geöffnet und verschlossen werden können. Jede Schiebetür 5 und 6 ist dabei über Laufteile 4 entlang einer Laufschiene 3 verfahrbar, die an einem Oberboden des Möbelkorpus 2 fixiert ist. An einer Unterseite des Möbelkorpus 2 ist eine Führungsschiene 7 vorgesehen, die für eine Führung der Schiebetüren 5 und 6 im Bodenbereich sorgt. Die Schiebetüren 5 und 6 sind dabei in zwei unterschiedlichen, parallel zueinander liegenden, Ebenen angeordnet.

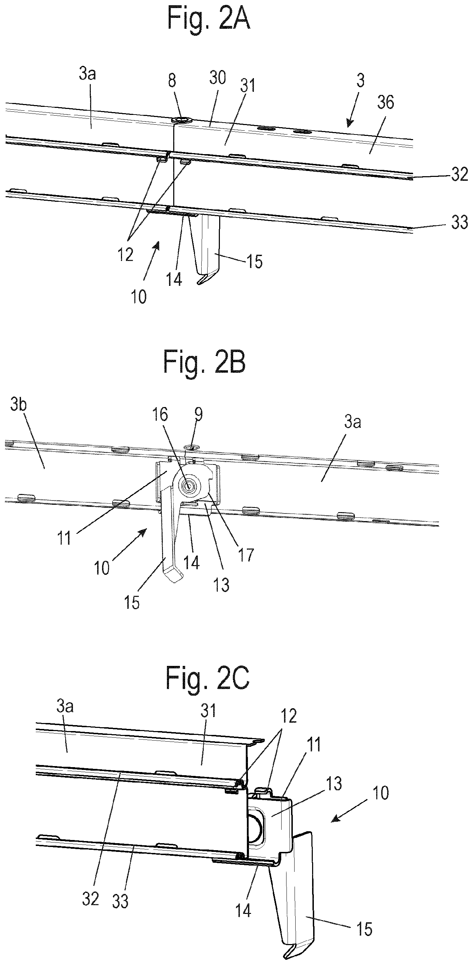

In den Figuren 2A bis 2D ist der Schiebetürbeschlag an dem Oberboden des Möbelkorpus 2 im Detail gezeigt. Die Laufschiene 3 umfasst zwei Profile 3a und 3b, die fluchtend zueinander angeordnet sind und den gleichen Profilquerschnitt besitzen. Die Profile 3a und 3b sind an einer Stoßstelle über eine Profilverbindung 10 miteinander verbunden.

Die Profilverbindung 10 umfasst ein Stützteil 11, das an den Profilen 3a und 3b fixiert ist. Hierfür umfasst das Stützteil 11 zwei Haken 12, die jeweils eine Öffnung in einem der Profile 3a oder 3b durchgreifen.

Die Profile 3a und 3b umfassen eine obere horizontale Kante 30, die auf einer Oberseite des Oberbodens des Möbelkorpus 2 aufliegt. An einem Stoßbereich der Profile 3a und 3b sind beide über ein Befestigungsmittel, beispielsweise eine Schraube 8, fixiert, die eine gemeinsame Öffnung 35 an der Stirnseite der Profile 3a und 3b durchgreift. In einer alternativen Ausführungsform der Profile 3a und 3b können zur Fixierung durch Befestigungsmittel am Oberboden und Festlegung der Profile zueinander auch jeweils separate Öffnungen 36 in der horizontalen Kante 30 verwendet werden.

Die Profile 3a und 3b bilden eine obere Laufbahn 32 und eine untere Laufbahn 33 aus, die in vertikaler Richtung übereinander in horizontaler Richtung , aber im Wesentlichen in der gleichen Ebene, angeordnet sind. Es ist auch möglich, dass die Profile 3a und 3b mehr als zwei Laufbahnen 32 und 33 aufweisen, wobei die Laufbahnen in vertikaler oder auch horizontaler Richtung versetzt angeordnet sein können.

Wie in Figur 2C erkennbar ist, umfasst die Profilverbindung 10 ein Spannelement 13, das relativ zu dem Stützteil 11 in vertikale Richtung bewegbar ist. Das Spannelement 13 umfasst an einer Unterseite eine Leiste 14, die die untere Laufbahn 33 an einer Unterseite untergreift und dort zur Abstützung anlegbar ist.

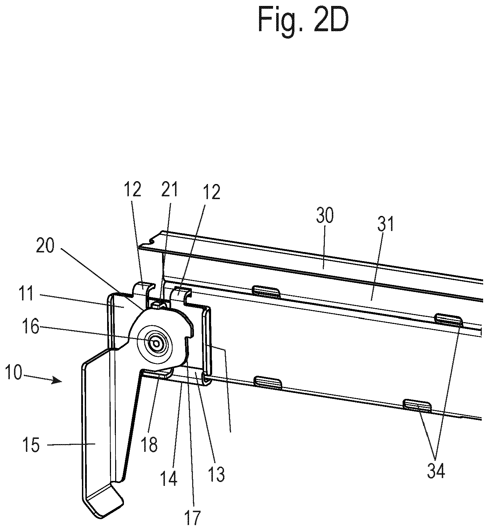

Wie aus Figur 2D erkennbar ist, umfasst die Profilverbindung 10 einen Spannmechanismus mit einem verschwenkbaren Spannhebel 15, der um eine Achse 16 drehbar gelagert ist. Der Spannhebel 15 umfasst radial beabstandet zu der Achse 16 eine Kurvenführung 17, deren Oberfläche in ihrem Verlauf in einem unterschiedlichen Abstand zu der Achse 16 angeordnet ist. Der Spannhebel 15 ist dabei an dem Spannelement 13 drehbar gelagert. Das Stützteil 11 umfasst an einem unteren Ende ein Gegenlager 18, auf dem sich die Kurvenführung 17 bei einem Drehen des Spannhebels 15 abstützen kann. Ferner ist ein Rand 20 und ein linearer Abschnitt 22 des Spannhebels 15 benachbart zu einem Anschlag 21 angeordnet. Der Rand 20 dient zur Führung einer Öffnungsbewegung während eines Demontagevorgangs. Dabei läuft der Rand 20 an dem Anschlag 21 entlang und wird dazu genutzt, das Stützteil 11 und das Spannelement 13 wieder zu lösen und entgegen der Spannrichtung zu bewegen. Der an den Rand 20 anschließende lineare Abschnitt 22 begrenzt zusammen mit dem Anschlag 21 die Öffnungsbewegung des Spannhebels 15.

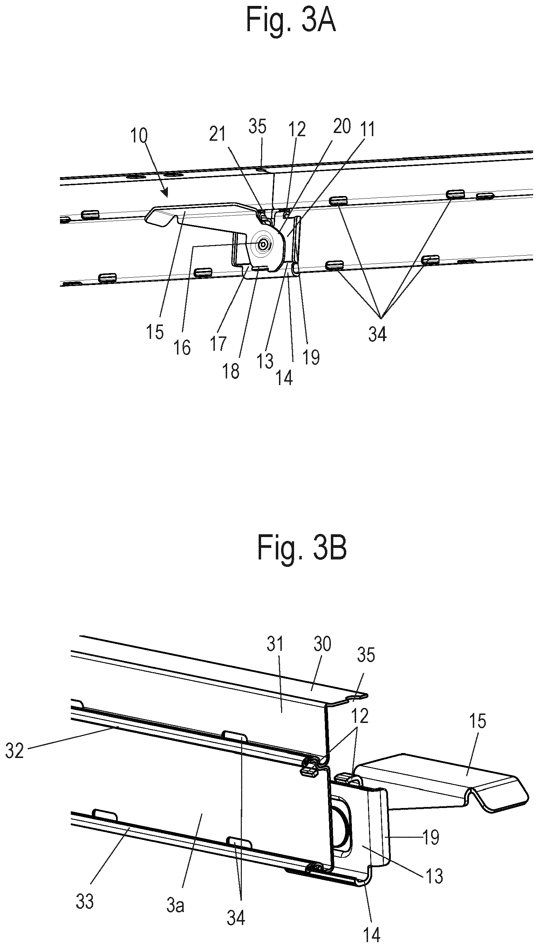

Zur Montage des Schiebetürbeschlages werden zunächst die beiden Profile 3a und 3b an dem Möbelkorpus 2 am Oberboden mithilfe eines Befestigungsmittels, beispielsweise einer Schraube 8, fixiert. Um die Stoßstelle der beiden Profile 3a und 3b auszurichten und zu stabilisieren, wird nun die Profilverbindung 10 unterhalb des Oberbodens montiert, wobei zunächst die Haken 12 in die Öffnungen an den Profilen 3a und 3b eingesteckt werden. Anschließend wird der Spannhebel 15 verschwenkt, insbesondere in einem Schwenkbereich zwischen 60° und 180°, wobei die Kurvenführung 17 entlang des Gegenlagers 18 bewegt wird und somit das Spannelement 13 mit der Leiste 14 in vertikale Richtung nach oben bewegt wird, bis die in den Figuren 3A bis 3C gezeigte Position erreicht ist. In dieser Position ist das Gegenlager 18 an einer Stufe der Kurvenführung 17 angelangt, die ein weiteres Drehen des Spannhebels 15 verhindert und somit eine Endlage des Spannmechanismus definiert. Der Spannhebel 15 ist um etwa 90° gedreht worden und nun parallel zur Längsrichtung der Profile 3a und 3b ausgerichtet.

Bei der vertikalen Bewegung des Spannelementes 13 sorgen seitliche Führungsstege 19 an dem Spannelement 13, die winkelförmig oder U-förmig umgebogen sind, für eine vertikale Führung des Spannelementes 13 relativ zu dem Stützteil 11, das mit einem Rand entlang der Führungsstege 19 gehalten ist.

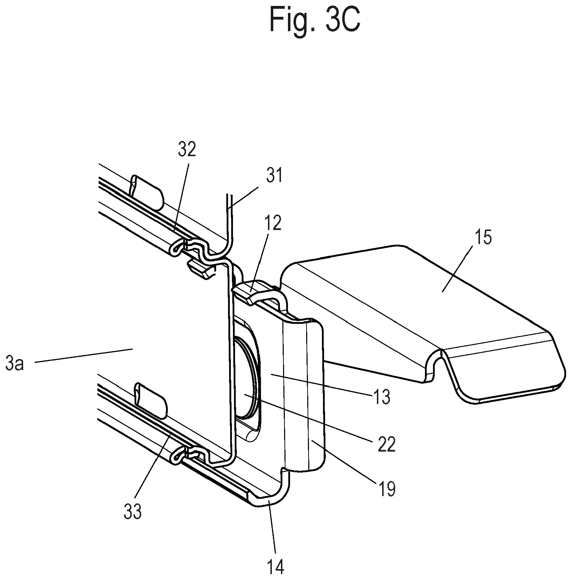

Wie in Figur 3C gezeigt ist, greift die Leiste 14 mit einer Kante unter die Laufbahn 33 und stützt somit die Stoßstelle zwischen den beiden Profilen 3a und 3b. Die Laufbahnen 32 und 33 sind nach oben konvex gewölbt ausgebildet, so dass in die konkave Aufnahme an der Unterseite der Laufbahn 33 die Kante der Leiste 14 eingreift und beim Drehen des Spannhebels 15 dort verspannt wird. Die Wegstrecke des Spannelementes 13 relativ zu dem Stützteil 11 kann in einem Bereich zwischen 0,5 mm bis 4 mm liegen.

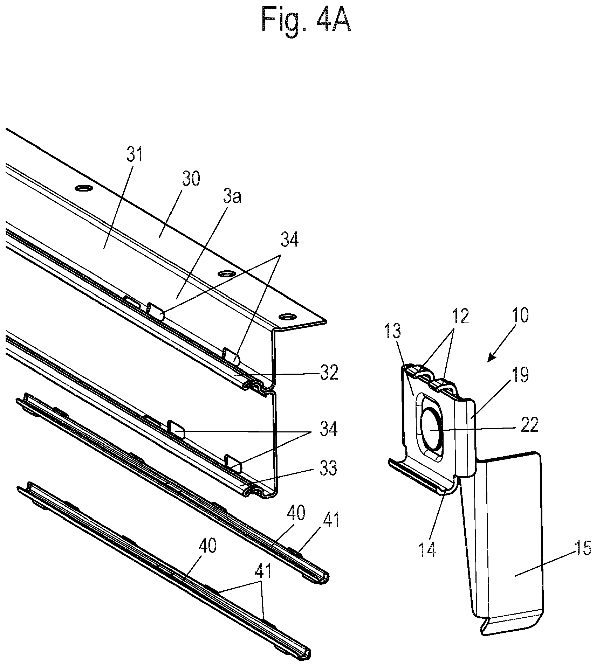

In Figur 4A ist die Profilverbindung 10 mit dem Profil 3a in einer Explosionsdarstellung gezeigt. Das Profil 3a, das spiegelbildlich dem Profil 3b gleicht, umfasst an einem vertikalen Abschnitt 31 Öffnungen 34, die benachbart zu der Laufbahn 32 oder 33 angeordnet sind. Die Öffnungen 34 dienen zur Montage eines stegförmigen Einlegeteils 40, das hervorstehende Vorsprünge 41 umfasst, die in die Öffnungen 34 bei der Montage einfügbar sind. Die Einlegeteile 40 werden auf oder neben die Laufbahn 32 oder 33 eingefügt, um die Last beim Überfahren der Stoßstelle durch Laufrollen oder Gleitkörper besser verteilen zu können und ein unmittelbares überfahren der Stoßstelle zu vermeiden.

Die Profilverbindung 10 ist als vormontierte Einheit nach Art eines Schnellspanners ausgebildet und kann werkzeugfrei montiert werden, wenn die Haken 12 in jeweils eine Öffnung an den Profilen 3a und 3b eingefügt werden und die Leiste 14 die Laufbahn 33 untergreift, um dann durch Verschwenken des Spannhebels 15 nach oben gegen die Unterseite der Laufbahn 33 verspannt zu werden.

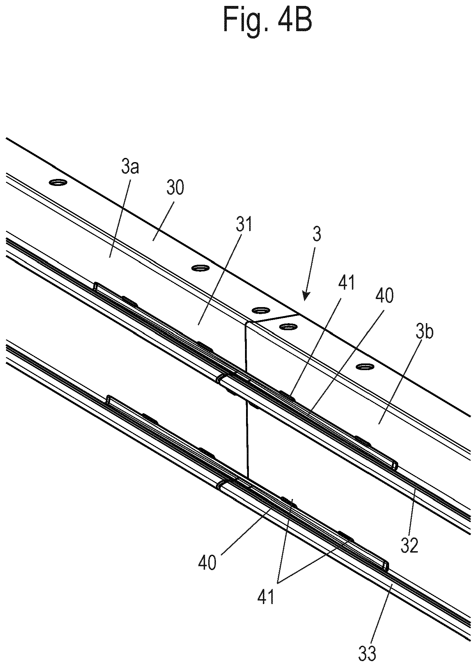

In Figur 4B ist die montierte Position der Laufschiene 3 gezeigt. Die beiden Profile 3a und 3b sind fluchtend angeordnet, und an der Stoßstelle sind die Einlegeteile 40 benachbart zu den Laufbahnen 32 oder 33 angeordnet.

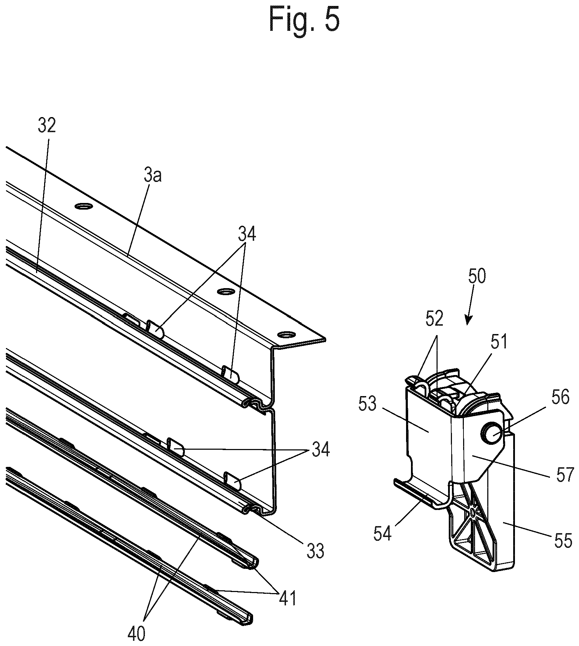

In Figur 5 ist ein zweites Ausführungsbeispiel eines Schiebetürbeschlages gezeigt, bei dem die Profile 3a und 3b wie bei dem ersten Ausführungsbeispiel ausgebildet sind. Es wird an der Stoßstelle der Profile 3a und 3b eine modifizierte Profilverbindung 50 eingesetzt.

Die Profilverbindung 50 umfasst ein Stützteil 51, das zwei Haken 52 aufweist, die wie bei dem vorangegangenen Ausführungsbeispiel an einem vertikalen Abschnitt 31 der Profile 3a und 3b in Öffnungen einfügbar sind. An dem Stützteil 51 ist ein Spannelement 53 bewegbar gehalten, an dessen Unterseite eine Leiste 54 ausgebildet ist, die die Laufbahn 33 untergreift. An dem Spannelement 53 sind zwei umgebogene Laschen 57 vorgesehen, an denen eine Achse 56 zur drehbaren Anbringung eines Spannhebels 55 ausgebildet ist.

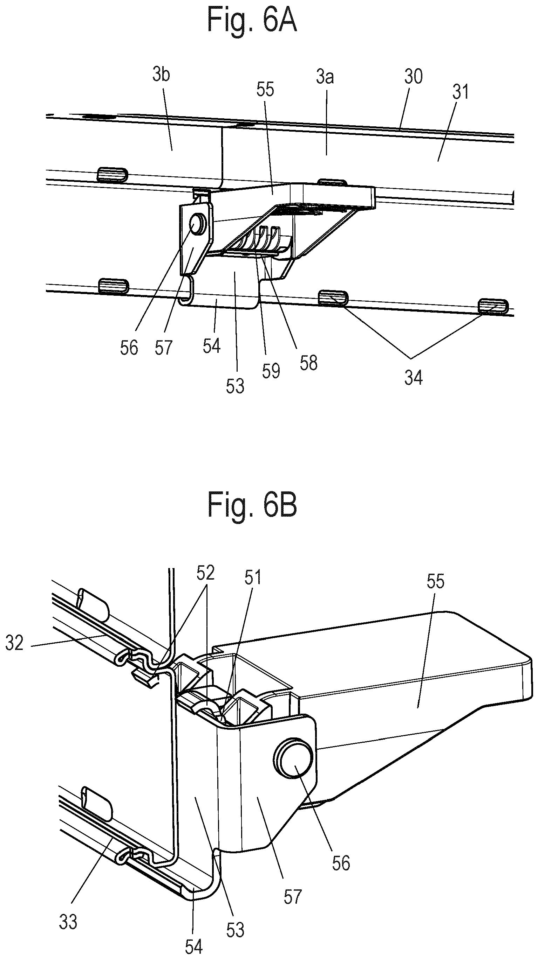

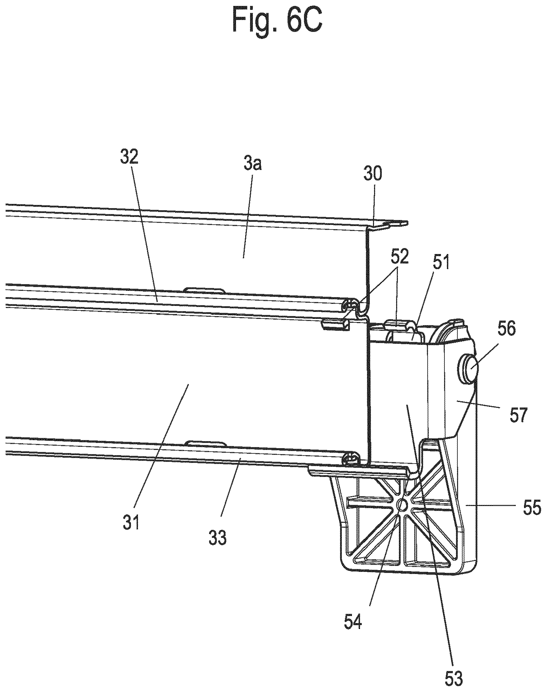

In den Figuren 6A bis 6C ist die Profilverbindung 50 in einer unverspannten Position gezeigt. Der Spannhebel 55 steht im Wesentlichen in vertikale Richtung, senkrecht zu einer Längsrichtung der Profile 3a und 3b.

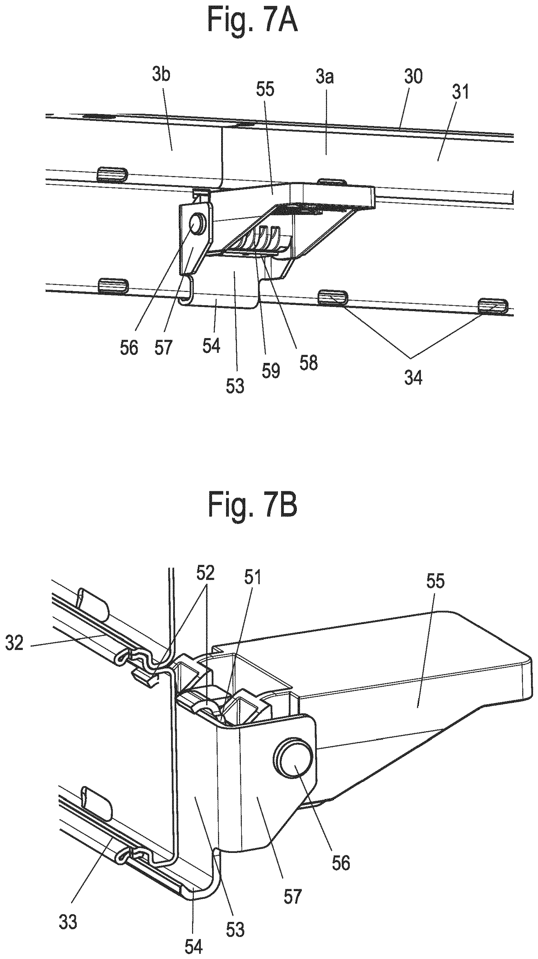

In den Figuren 7A und 7B ist die Profilverbindung 50 in einer verspannten Position gezeigt, in der der Spannhebel 55 nach oben verschwenkt wurde. Nun steht der Spannhebel 55 im Wesentlichen senkrecht in horizontale Richtung von den Profilen 3a und 3b hervor. An der Unterseite des Spannhebels 55 ist eine Kurvenführung 59 ausgebildet, die an einem Gegenlager 58 des Stützteils 51 abgestützt ist. Wird der Spannhebel 55 nach oben um etwa 90° verschwenkt, gleitet die Kurvenführung 59 an dem Gegenlager 58 entlang und bewegt die Achse 56 und somit das Spannelement 53 in vertikale Richtung nach oben, so dass die Leiste 54 gegen die Unterseite der Laufbahn 33 drückt. Dadurch sorgt die Leiste 54 für eine exakte Ausrichtung der Stege der Laufbahn 33. Die Achse 56 des Spannhebels 55 ist dabei parallel zur Längsrichtung der Profile 3a und 3b ausgerichtet.

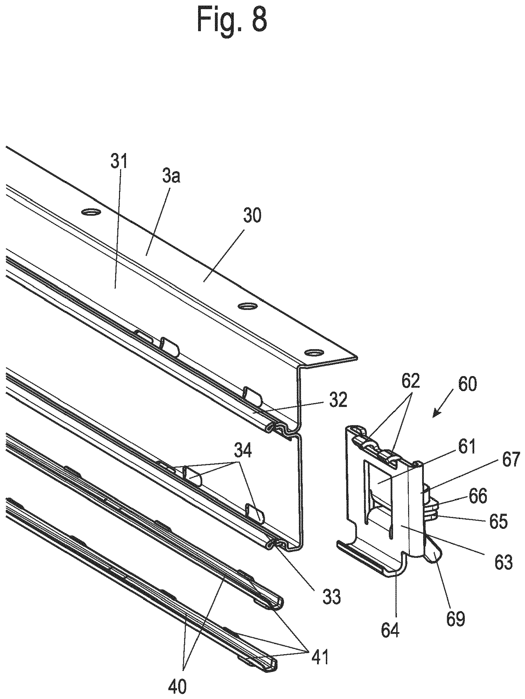

In Figur 8 ist ein drittes Ausführungsbeispiel einer modifizierten Profilverbindung 60 für Profile 3a und 3b gezeigt. Die Profile 3a und 3b sind wie bei den ersten Ausführungsbeispielen ausgebildet und können optional im Bereich der Stoßstelle Einlegeteile 40 aufweisen, die mit Vorsprüngen 41 in Öffnungen 34 eingesteckt werden, um die Kräfteverteilung beim Überfahren der Stoßstelle zu optimieren.

Die Profilverbindung 60 umfasst ein Stützteil 61, das wie bei den vorangegangenen Ausführungsbeispielen zwei Haken 62 aufweist, die jeweils in eine Öffnung an einem der Profile 3a oder 3b einfügbar sind, um das Stützteil 61 dort zu fixieren. An dem Stützteil 61 ist ein Spannelement 63 in vertikale Richtung bewegbar gehalten, das eine Leiste 64 aufweist, die eine Laufbahn 33 untergreift. Anders als bei den vorangegangenen Ausführungsbeispielen umfasst die Profilverbindung 60 keinen verschwenkbaren Spannhebel, sondern einen Spannmechanismus mit einer Mutter 69.

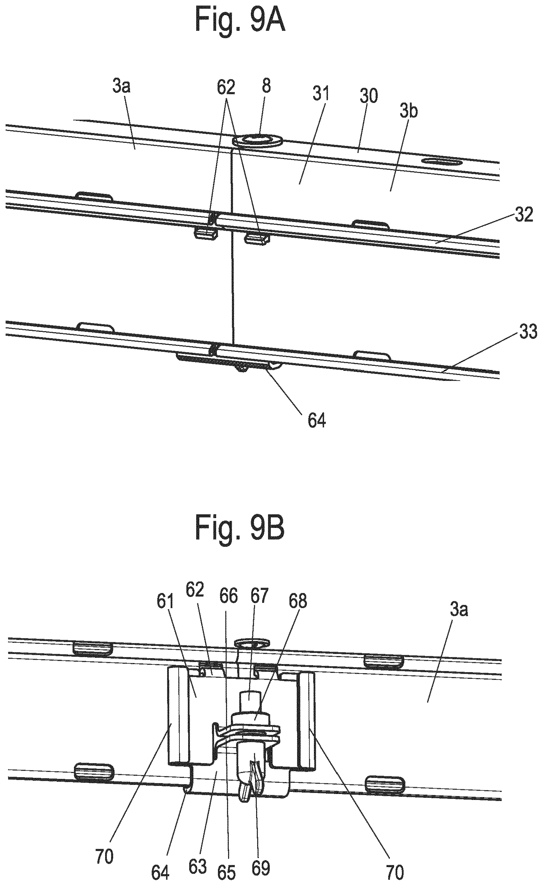

In den Figuren 9A und 9B ist der Stoßbereich der Profile 3a und 3b gezeigt, wobei die Profilverbindung 60 an der Rückseite der Profile 3a und 3b angeordnet ist. Die Profilverbindung 60 umfasst an dem Stützteil 61 eine hervorstehende Lasche 66, die von einer Gewindestange 67 durchgriffen ist. An dem Spannelement 63 ist eine weitere hervorstehende Lasche 65 mit einer Öffnung ausgebildet, die ebenfalls von der Gewindestange 67 durchgriffen ist. An der Gewindestange 67 ist ein Anschlagelement 68, beispielsweise eine Kontermutter, aufgeschraubt, während an der Unterseite die Mutter 69 angeordnet, beispielsweise aufgeschraubt, eingepresst oder aufgeschweißt, ist, die zum Verspannen der Profilverbindung 60 dient. Durch Drehen der Mutter 69 kann das Spannelement 63 relativ zu dem Stützteil 61 in vertikale Richtung verschoben werden, um die Leiste 64 gegen die Unterseite der Laufbahn 33 zu drücken. Auch dadurch kann der Stoßbereich zwischen den Profilen 3a und 3b stabilisiert werden.

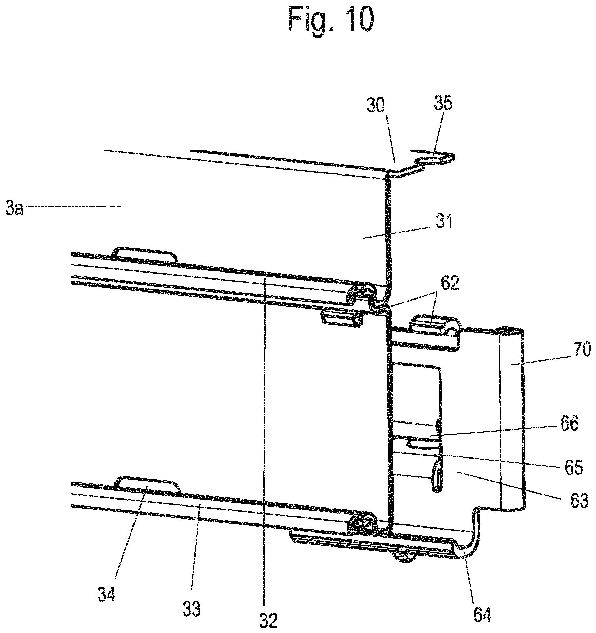

In Figur 10 ist die Stoßstelle mit nur einem Profil 3a gezeigt, und es ist erkennbar, dass die Leiste 64 mit der Kante gegen die Unterseite der Laufbahn 33 verspannbar ist. Das Spannelement 63 umfasst einen umgebogenen Führungssteg 70, der einen Rand des Stützteils 61 umgreift, so dass das Spannelement 63 in vertikale Richtung an dem Stützteil 61 geführt ist.

In den dargestellten Ausführungsbeispielen sind das Stützteil 11, 51 oder 61 und das Spannelement 13, 53 oder 63 jeweils aus gebogenen Metallblechen hergestellt, können aber auch aus Kunststoff oder anderen Materialien hergestellt sein. Gleiches gilt für den Spannhebel 15 oder 55.

Die Profile 3a und 3b umfassen zwei Laufbahnen 32 und 33, von denen nur die untere Laufbahn 33 durch eine Profilverbindung 10, 50 oder 60 abgestützt ist. Es ist natürlich möglich, auch an der oberen Laufbahn 32 eine weitere Profilverbindung zur Abstützung vorzusehen. Die Biegebelastung an der unteren Laufbahn 33 ist ohne Profilverbindung allerdings größer als an der stabileren oberen Laufbahn, die benachbart zu einer Stirnseite des Oberbodens angeordnet ist. Dadurch kann auch die Vorsehung nur einer Profilverbindung 10, 50 oder 60 für die untere Laufbahn 33 ausreichend sein.

Die Profile 3a und 3b sind aus einem gebogenen Stahlblech hergestellt. Es ist auch möglich, eine Profilverbindung 10, 50 oder 60 für extrudierte Profile einzusetzen.

Zudem kann der Schiebetürbeschlag statt an einem Möbelkorpus 2 auch zur Aufhängung von Schiebetüren an Raumteilern eingesetzt werden.

### Bezugszeichenliste

- 1: Schrankmöbel
- 2: Möbelkorpus
- 3: Laufschiene
- 3a, 3b: Profil
- 4: Laufteil
- 5: Schiebetür
- 6: Schiebetür
- 7: Führungsschiene
- 8: Schraube
- 10: Profilverbindung
- 11: Stützteil
- 12: Haken
- 13: Spannelement
- 14: Leiste
- 15: Spannhebel
- 16: Achse
- 17: Kurvenführung
- 18: Gegenlager
- 19: Führungssteg
- 20: Rand
- 21: Anschlag
- 22: Abschnitt
- 30: Kante
- 31: vertikaler Abschnitt
- 32: Laufbahn
- 33: Laufbahn
- 34: Öffnung
- 35: Öffnung
- 36: Öffnung
- 40: Einlegeteil
- 41: Vorsprung
- 50: Profilverbindung
- 51: Stützteil
- 52: Haken
- 53: Spannelement
- 54: Leiste
- 55: Spannhebel
- 56: Achse
- 57: Lasche
- 58: Gegenlager
- 59: Kurvenführung
- 60: Profilverbindung
- 61: Stützteil
- 62: Haken
- 63: Spannelement
- 64: Leiste
- 65: Lasche
- 66: Lasche
- 67: Gewindestange
- 68: Anschlagelement
- 69: Mutter
- 70: Führungssteg

## Patentansprüche

1. Schiebetürbeschlag mit zwei an einer Stoßstelle über eine Profilverbindung (10, 50, 60) miteinander verbundenen Profilen (3a, 3b), die mindestens eine Laufbahn (32, 33) für Rollen oder Gleitkörper eines verfahrbaren Laufteils ausbilden, wobei die Profilverbindung (10, 50, 60) ein an den Profilen (3a, 3b) festgelegtes Stützteil (11, 51, 61) und ein über einen Spannmechanismus relativ zu dem Stützteil (11, 51, 61) bewegbares Spannelement (13, 53, 63) aufweist, das die beiden Profile (3a, 3b) zu dem Stützteil (11, 51, 61) hin vorspannt, **dadurch gekennzeichnet, dass** die Profile (3a, 3b) mindestens zwei in der Einbauposition übereinander liegende Laufbahnen (32, 33) aufweisen und das Spannelement (13, 53, 63) an einer Unterseite der unteren Laufbahn (33) anliegt.

2. Schiebetürbeschlag nach Anspruch 1, **dadurch gekennzeichnet, dass** das Spannelement (13, 53, 63) relativ zu dem Stützteil (11, 51, 61) über den Spannmechanismus in der eingebauten Position in vertikale Richtung bewegbar ist.

3. Schiebetürbeschlag nach Anspruch 1 oder 2, **dadurch gekennzeichnet, dass** das Spannelement (13, 53, 63) an den beiden Profilen (3a, 3b) auf der zu der mindestens einen Laufbahn (32, 33) gegenüberliegenden Seite anliegt.

4. Schiebetürbeschlag nach Anspruch 3, **dadurch gekennzeichnet, dass** das Spannelement (13, 53, 63) eine hervorstehende Leiste (14, 54, 64) aufweist, die die Laufbahn (32, 33) untergreift.

5. Schiebetürbeschlag nach einem der vorhergehenden Ansprüche, **dadurch gekennzeichnet, dass** das Stützteil (11, 51, 61) zwei Haken (12, 52, 62) aufweist und jeweils ein Haken (12, 52, 62) eine Öffnung an einem der beiden Profile (3a, 3b) durchgreift.

6. Schiebetürbeschlag nach einem der vorhergehenden Ansprüche, **dadurch gekennzeichnet, dass** das Spannelement (13, 53) über einen verschwenkbaren Spannhebel (15, 55) relativ zu dem Stützteil (11, 51) bewegbar ist.

7. Schiebetürbeschlag nach Anspruch 6, **dadurch gekennzeichnet, dass** an dem Spannhebel (15, 55) eine Kurvenführung (17, 59) ausgebildet ist, die an einem Gegenlager (18, 58) bewegbar ist, um das Spannelement (13, 53) relativ zu dem Stützteil (11, 51) zu bewegen.

8. Schiebetürbeschlag nach Anspruch 6 oder 7, **dadurch gekennzeichnet, dass** eine Drehachse (16, 56) des Spannhebels (15, 55) in Längsrichtung der Profile (3a, 3b) oder senkrecht zur Längsrichtung der Profile (3a, 3b) ausgerichtet ist.

9. Schiebetürbeschlag nach einem der Ansprüche 1 bis 5, **dadurch gekennzeichnet, dass** der Spannmechanismus eine Gewindestange (67) und eine an der Gewindestange (67) angeordnete, beispielsweise aufgeschraubte, eingepresste oder aufgeschweißte, Mutter (69) umfasst.

10. Schiebetürbeschlag nach einem der vorhergehenden Ansprüche, **dadurch gekennzeichnet, dass** an der Stoßstelle ein Einlegeteil (40) an oder auf einer Laufbahn (32, 33) der beiden Profile (3a, 3b) eingelegt ist.

11. Möbel (1) mit einem Möbelkorpus (2), an dem ein Schiebetürbeschlag nach einem der vorhergehenden Ansprüche montiert ist.

12. Verfahren zur Montage eines Schiebetürbeschlages mit den folgenden Schritten:
- Festlegen eines ersten Profils (3a) an einem Möbelkorpus;
- Festlegen eines zweiten Profils (3b) in Verlängerung des ersten Profils (3a) an dem Möbelkorpus (2);
- Fixieren einer Profilverbindung (10, 50, 60) an einer Stoßstelle des ersten und des zweiten Profils (3a, 3b);
- wobei die Profilverbindung (10, 50, 60) ein an den Profilen (3a, 3b) festgelegtes Stützteil (11, 51, 61) und einen über einen Spannmechanismus relativ zu dem Stützteil (11, 51, 61) bewegbares Spannelement (13, 53, 63) aufweist, das beim Fixieren an den Profilen (3a, 3b) relativ zu dem Stützteil (11, 51, 61) verspannt wird,
**dadurch gekennzeichnet, dass** die Profile (3a, 3b) mindestens zwei in der Einbauposition übereinander liegende Laufbahnen (32, 33) aufweisen und das Spannelement (13, 53, 63) an einer Unterseite der unteren Laufbahn (33) anliegt.

13. Verfahren nach Anspruch 12, **dadurch gekennzeichnet, dass** das Verspannen des Spannelementes (13, 53, 63) relativ zu dem Stützteil (11, 51, 61) werkzeugfrei über einen verschwenkbaren Hebel (15, 55) oder eine drehbare Mutter (69) erfolgt.

14. Verfahren nach Anspruch 12 oder 13, **dadurch gekennzeichnet, dass** das Spannelement (13, 53, 63) beim Fixieren an den Profilen (3a, 3b) relativ zu dem Stützteil (11, 51, 61) in einer vertikalen Richtung verspannt wird.

## Claims

1. Sliding door fitting having two profiles (3a, 3b) which are connected to one another at a joint via a profile connection (10, 50, 60) and which form at least one track (32, 33) for rollers or sliding bodies of a movable running part, the profile connection (10, 50, 60) having a support part (11, 51, 61) which is fixed to the profiles (3a, 3b) and a tensioning element (13, 53, 63) which can be moved relative to the support part (11, 51, 61) via a tensioning mechanism and which pretensions the two profiles (3a, 3b) towards the support part (11, 51, 61), **characterized in that** the profiles (3a, 3b) have at least two tracks (32, 33) lying one above the other in the installation position and the tensioning element (13, 53, 63) bears against an underside of the lower track (33) .

2. Sliding door fitting according to claim 1, **characterized in that** the tensioning element (13, 53, 63) can be moved in the vertical direction relative to the support part (11, 51, 61) via the tensioning mechanism in the installed position.

3. Sliding door fitting according to claim 1 or 2, **characterized in that** the tensioning element (13, 53, 63) bears against the two profiles (3a, 3b) on the side opposite the at least one track (32, 33).

4. Sliding door fitting according to claim 3, **characterized in that** the tensioning element (13, 53, 63) has a projecting strip (14, 54, 64) which engages under the track (32, 33).

5. Sliding door fitting according to one of the preceding claims, **characterized in that** the support part (11, 51, 61) has two hooks (12, 52, 62) and in each case one hook (12, 52, 62) engages through an opening on one of the two profiles (3a, 3b).

6. Sliding door fitting according to one of the preceding claims, **characterized in that** the tensioning element (13, 53) is movable relative to the support part (11, 51) via a pivotable tensioning lever (15, 55).

7. Sliding door fitting according to claim 6, **characterized in that** a cam guide (17, 59) is formed on the tensioning lever (15, 55), which can be moved on a counter bearing (18, 58) in order to move the tensioning element (13, 53) relative to the support part (11, 51).

8. Sliding door fitting according to claim 6 or 7, **characterized in that** an axis of rotation (16, 56) of the tensioning lever (15, 55) is aligned in the longitudinal direction of the profiles (3a, 3b) or perpendicular to the longitudinal direction of the profiles (3a, 3b).

9. Sliding door fitting according to one of claims 1 to 5, **characterized in that** the tensioning mechanism comprises a threaded rod (67) and a nut (69) arranged on the threaded rod (67), for example screwed on, pressed in or welded on.

10. Sliding door fitting according to one of the preceding claims, **characterized in that** an insert (40) is inserted at the joint on or on a track (32, 33) of the two profiles (3a, 3b).

11. Furniture (1) with a furniture body (2) on which a sliding door fitting according to one of the preceding claims is mounted.

12. Method for mounting a sliding door fitting with the following steps:
- Fixing a first profile (3a) to a furniture body;
- Attach a second profile (3b) to the furniture body (2) as an extension of the first profile (3a);
- Fixing a profile connection (10, 50, 60) at a joint of the first and second profiles (3a, 3b);
- wherein the profile connection (10, 50, 60) has a support part (11, 51, 61) fixed to the profiles (3a, 3b) and a tensioning element (13, 53, 63) which can be moved relative to the support part (11, 51, 61) via a tensioning mechanism and which is tensioned relative to the support part (11, 51, 61) when fixed to the profiles (3a, 3b),
**characterized in that** the profiles (3a, 3b) have at least two tracks (32, 33) lying one above the other in the installation position and the tensioning element (13, 53, 63) rests against an underside of the lower track (33).

13. Method according to claim 12, **characterized in that** the tensioning element (13, 53, 63) is clamped relative to the support part (11, 51, 61) without tools by means of a pivotable lever (15, 55) or a rotatable nut (69).

14. Method according to claim 12 or 13, **characterized in that** the tensioning element (13, 53, 63) is braced in a vertical direction relative to the support part (11, 51, 61) during fixing to the profiles (3a, 3b).

## Revendications

1. Ferrure de porte coulissante avec deux profilés (3a, 3b) reliés l'un à l'autre en un point de jonction par un assemblage de profilés (10, 50, 60), qui forment au moins un chemin de roulement (32, 33) pour des galets ou des corps de glissement d'une pièce de roulement mobile, l'assemblage de profilés (10, 50, 60) comportant une partie de support (11, 51, 61) fixée aux profilés (3a, 3b) et un l'élément de serrage (13, 53, 63) fixé par rapport à la partie de support (11, 51, 61) par un mécanisme de serrage, qui précontraint les deux profilés (3a, 3b) en direction de la partie de support (11, 51, 61), **caractérisé en ce que** les profilés (3a, 3b) présentent au moins deux chemins de roulement (32, 33) superposés en position de montage et l'élément de serrage (13, 53, 63) s'applique contre une face inférieure du chemin de roulement inférieur (33) .

2. Ferrure de porte coulissante selon la revendication 1, **caractérisée en ce que** l'élément de serrage (13, 53, 63) peut être déplacé dans la direction verticale par rapport à la partie de support (11, 51, 61) par l'intermédiaire du mécanisme de serrage dans la position installée.

3. Ferrure de porte coulissante selon la revendication 1 ou 2, **caractérisée en ce que** l'élément de serrage (13, 53, 63) s'applique contre les deux profilés (3a, 3b) sur le côté opposé à l'au moins un chemin de roulement (32, 33).

4. Ferrure de porte coulissante selon la revendication 3, **caractérisée en ce que** l'élément de serrage (13, 53, 63) présente une baguette saillante (14, 54, 64) qui s'engage sous le chemin de roulement (32, 33).

5. Ferrure de porte coulissante selon l'une des revendications précédentes, **caractérisée en ce que** la pièce de support (11, 51, 61) présente deux crochets (12, 52, 62) et un crochet (12, 52, 62) passe respectivement à travers une ouverture sur l'un des deux profilés (3a, 3b).

6. Ferrure de porte coulissante selon l'une des revendications précédentes, **caractérisée en ce que** l'élément de serrage (13, 53) peut être déplacé par rapport à la partie de support (11, 51) par l'intermédiaire d'un levier de serrage pivotant (15, 55).

7. Ferrure de porte coulissante selon la revendication 6, **caractérisée en ce qu'**un guide de came (17, 59) est formé sur le levier de serrage (15, 55) et peut être déplacé sur un contre-appui (18, 58) pour déplacer l'élément de serrage (13, 53) par rapport à la partie de support (11, 51).

8. Ferrure de porte coulissante selon la revendication 6 ou 7, **caractérisée en ce qu'**un axe de rotation (16, 56) du levier de serrage (15, 55) est orienté dans la direction longitudinale des profilés (3a, 3b) ou perpendiculairement à la direction longitudinale des profilés (3a, 3b).

9. Ferrure de porte coulissante selon l'une des revendications 1 à 5, **caractérisée en ce que** le mécanisme de serrage comprend une tige filetée (67) et un écrou (69) disposé sur la tige filetée (67), par exemple vissé, enfoncé ou soudé.

10. Ferrure de porte coulissante selon l'une des revendications précédentes, **caractérisée en ce qu'**une pièce d'insertion (40) est insérée au niveau de la jonction sur ou contre un chemin de roulement (32, 33) des deux profilés (3a, 3b).

11. Meuble (1) comprenant un corps de meuble (2) sur lequel est montée une ferrure de porte coulissante selon l'une des revendications précédentes.

12. Procédé de montage d'une ferrure de porte coulissante comprenant les étapes suivantes :
- Fixation d'un premier profilé (3a) sur un corps de meuble ;
- la fixation d'un deuxième profilé (3b) dans le prolongement du premier profilé (3a) sur le corps de meuble (2) ;
- fixer un assemblage de profilés (10, 50, 60) à un point de jonction des premier et deuxième profilés (3a, 3b) ;
- dans lequel l'assemblage de profilés (10, 50, 60) comprend une partie de support (11, 51, 61) fixée aux profilés (3a, 3b) et un élément de serrage (13, 53, 63) mobile par rapport à la partie de support (11, 51, 61) par l'intermédiaire d'un mécanisme de serrage, qui est serré par rapport à la partie de support (11, 51, 61) lors de la fixation aux profilés (3a, 3b),
**caractérisé en ce que** les profilés (3a, 3b) présentent au moins deux chemins de roulement (32, 33) superposés dans la position de montage et l'élément de serrage (13, 53, 63) s'appuie sur une face inférieure du chemin de roulement inférieur (33).

13. Procédé selon la revendication 12, **caractérisé en ce que** le serrage de l'élément de serrage (13, 53, 63) par rapport à la partie de support (11, 51, 61) s'effectue sans outil par l'intermédiaire d'un élément de serrage pivotant (15, 55) ou d'un écrou rotatif (69).

14. Procédé selon la revendication 12 ou 13, **caractérisé en ce que** l'élément de serrage (13, 53, 63) est serré dans une direction verticale par rapport à la partie de support (11, 51, 61) lors de la fixation sur les profilés (3a, 3b).
